Europäisches Patentamt

European Patent Office

Office européen des brevets

(11) Publication number: **0 045 629**
**B1**

(12) **EUROPEAN PATENT SPECIFICATION**

(45) Date of publication of patent specification: **27.12.84**

(21) Application number: **81303488.1**

(22) Date of filing: **30.07.81**

(51) Int. Cl.³: **F 16 L 47/00,** B 29 C 25/00,
F 16 L 58/18

(54) **Device for and method of internal pipeline protection.**

(30) Priority: **31.07.80 US 174304**
**20.05.81 US 263011**
**07.07.81 US 279631**

(43) Date of publication of application:
**10.02.82 Bulletin 82/06**

(45) Publication of the grant of the patent:
**27.12.84 Bulletin 84/52**

(84) Designated Contracting States:
**AT BE CH DE FR IT LI NL SE**

(56) References cited:
**FR-A-2 370 225**
**FR-A-2 438 788**
**GB-A-1 116 879**
**US-A-3 770 556**

(73) Proprietor: **RAYCHEM CORPORATION**
**300 Constitution Drive**
**Menlo Park California 94025 (US)**

(72) Inventor: **Otte, Richard Frederick**
**27935 Roble Alto**
**Los Altos Hills California 94022 (US)**
Inventor: **Claypool, James L.**
**1205 Wasatch Drive**
**Mountain View California 94040 (US)**
Inventor: **White, Lawrence Joseph**
**590 Hazel Dell Way No. 1**
**San Jose California 95129 (US)**
Inventor: **Broyles, Harry Clifton**
**260 North Pastoria**
**Sunnyvale California 94086 (US)**
Inventor: **Brooks, Peter L.**
**611 Flen Alto**
**Los Altos California 94086 (US)**
Inventor: **Cook, Paul M.**
**48 Mansion Court**
**Menlo Park California 94025 (US)**

(74) Representative: **Jones, David Colin et al**
**Raychem Limited Intellectual Property Law**
**Department Swan House 37-39 High Holborn**
**London WC1 (GB)**

Courier Press, Leamington Spa, England.

**0 045 629**

## Description

As a result of secondary recovery requirements in oil fields, hot, often saline and corrosive water containing a variety of impurities is pumped at high pressures into the ground to force the oil out. Although the pipes used in this process usually have interior protective linings of plastics material, the areas where the pipe sections have been welded together do not have such a lining and consequently are subject to very high corrosive rates.

It is an object of the invention to provide a method of and apparatus for preventing, or at least reducing corrosion in pipes, and particularly, though not exclusively, in weld areas thereof, which may be irregular in surface condition.

In accordance with one aspect of the present invention, there is provided an internal pipe protection device comprising tubular delivery means arranged to expand transversely upon application of heat; tubular liner means outside of and in contact with the delivery means, the liner means being corrosion resistant and deformable upon application of heat; and bonding means outside of and in contact with the liner means to bond the liner means to the inside surface of a pipe, wherein the bonding means is flowable and activatable by application of heat, and the delivery means is expandable transversely upon application of heat, such that it deforms the liner means and forces the liner and bonding means transversely outward progressively along their length so that the bonding means comes progressively into contact with the inside of the pipe, and flows progressively along the outer surface of the liner means between the liner means and the inside of the pipe.

The present invention thus provides a device which may be placed in general position inside the pipe prior to the joining of two pipe sections and which, when located directly beneath the welded and internally exposed joint after the joint has been welded, is expanded by application of external heat so as to apply a corrosion-resistant liner means and heat activated bonding means to the inside of the pipe joint. The structure and configuration of the delivery means applies the liner means and the flowable bonding means progressively into intimate contact with the inside of the pipe wall thereby to prevent the formation of voids in said bonding means.

The delivery means may be formed from shape memory metal, which may be arranged to expand radially by application of the heat and thus serve as a driver for the liner means. In such embodiments, metal is advantageously coated with a corrosion-resistant material. Alternatively, the delivery means may be formed from a high modulus engineering plastics material that is retained in a transversely, usually radially, compressed condition by the liner means until the liner means softens and deforms upon application of heat.

Aside from the potential severe corrosion problems associated with any void areas, a major problem is encountered when a protectively lined pipe is pressurised and then later de-pressurised. Over time, any void in a pressurised pipe may become pressurised by the components in fluid in the pipe. When the pressure in the pipe is rapidly reduced the void can in essence explode, thereby damaging the integrity of the corrosion resistant liner. The configuration and articulation of the delivery means of the device inherently causes a "pumping" wave of the bonding means, thereby bonding a chemically resistant liner means to the joint interior surface in a manner free of voids.

The device may be actuated from outside a pipe after the device has been placed in the pipe.

Furthermore, the liner means may be applied to a roughened or irregular inside surface of a pipe to protect that area and compensate for its surface condition.

Advantageously, the bonding means comprises adhesive and a carrier therefor, so that flow of the adhesive can be controlled thereby to avoid a starved bondline. The carrier may comprise a cloth-like matrix, for example a fibreglass cloth, and the adhesive may be impregnated therein.

GB Patent no. 1 116879 discloses a recoverable member, which is provided with a layer of flowable viscous material in the direction of recovery of the member. An anti-tack coating covers the exposed surface of the layer of flowable material.

In accordance with another aspect of the invention, there is provided a method of providing corrosion protection for the inside of a pipe comprising the steps of locating a heat-activatable pipe protection device within a section of the pipe to be protected, the device comprising transversely heat-expandable delivery means, heat-deformable corrosion-resistant liner means outside of and in contact with the delivery means, and a heat-activatable bonding means outside of and in contact with the liner means; and heating the outside of the pipe along said section such that the delivery means expands and the liner and bonding means are forced transversely outward progressively along their length so that the bonding means comes progressively into contact with the inside of the pipe, the bonding means thereby flowing progressively along the outer surface of the liner means between the liner means and the inside of the pipe to form a bond therebetween.

The heating may be effected generally uniformly or progressively along the section of the pipe to produce the progressive flow of the bonding means.

Several embodiments of an internal pipe protection device, and methods of providing internal pipe protection, each in accordance with the present invention, will now be described, by way of example, with reference to the accompanying drawings, in which:

Figure 1 illustrates in perspective view one embodiment of the device before installation;

2

Figure 2 illustrates in perspective view the device of Figure 1 after it has been heated;

Figure 3 illustrates in full section view the device of Figure 1 placed within pipes to be protected, before activation of the device;

Figure 4 is a full cross-sectional view as in Figure 3, during installation;

Figure 5 is a full cross-sectional view of the device in Figures 3 and 4 after installation has been completed;

Figure 6 is a planar view of a portion of a delivery means of the device of Figure 1 in its compressed, or non-expanded, condition;

Figure 7 is a planar view of a portion of an alternative embodiment of the delivery means of Figure 6 in its compressed, or non-expanded, condition;

Figure 8 is a planar view of the delivery means of Figure 6 in its recovered, or expanded, condition;

Figure 9 is a partial cross-sectional view of the weld area of Figure 4, illustrating a wave of bonding material being generated by the delivery means;

Figure 10 is a partial cross-sectional view similar to Figure 9 illustrating further progress of the bonding material;

Figures 11 to 14 are schematic cross-sectional views of further alternative embodiments of delivery means suitable for use in the device of Figure 3; and

Figures 15 to 17 illustrate the use of programmed heating on the device shown in Figure 14.

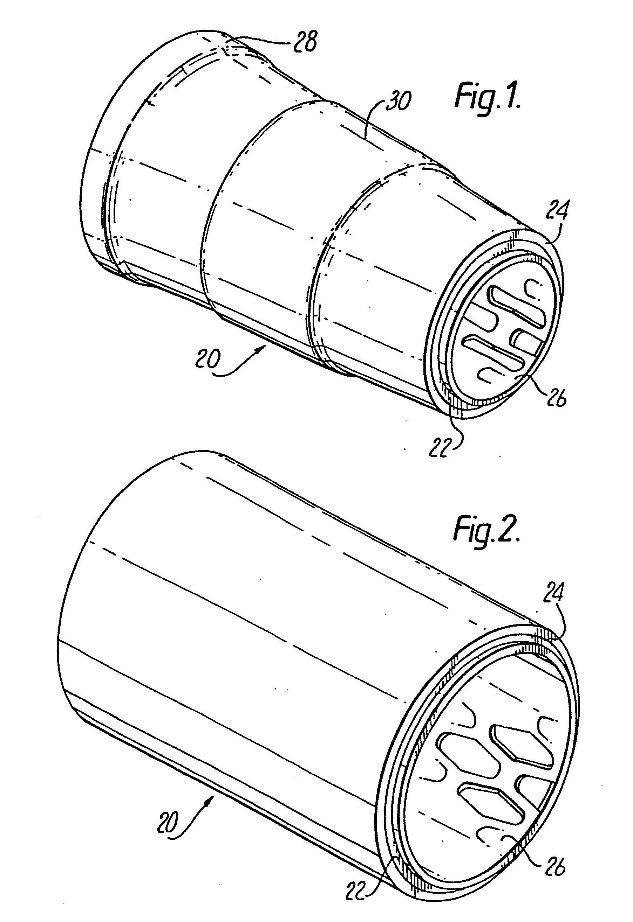

Referring to the drawings, Figure 1 illustrates generally at 20 an internal pipe protection device. The device 20 comprises a liner 22, bonding material 24 and a delivery or driver arrangement 26. The delivery arrangement 26 is a radially compressed, open, cage-like tubular member of memory metal which expands upon heating to force the liner 22 and bonding material 24 radially outwardly, as can be more clearly seen in Figure 2. Figures 1 and 2 illustrate the device 20 before and after expansion without regard to alterations in the surface of the bonding material 24 that would occur due to the internal configuration of a pipe in which the device 20 would be inserted. It is important to note in Figure 1 that the device is frusto-conical in overall shape before heating and generally cylindrical in shape, as illustrated in Figure 2, after heating. A large amount of the bonding material 24 may be placed at the large end of the device as noted at 28, and another large amount of the material may be placed approximately midway along the length of the device as noted at 30. The additional amount of material at 30 is useful when the device is placed directly under a welded pipe joint which inherently has surface irregularities, as will be discussed later.

It can also be seen in Figures 1 and 2 that the delivery arrangement 26 may extend axially beyond the liner and the bonding material at the small end of the device. The reason for this extension is to prevent the liner 22, which envelopes the delivery arrangement 26, from growing over the edge of the delivery arrangement as the device expands, since such growth would subject the liner to splitting forces and could potentially obstruct flow through the installed internal pipe protection device 20. This problem will become more apparent after detailed discussion of the expansion of the internal pipe protection device.

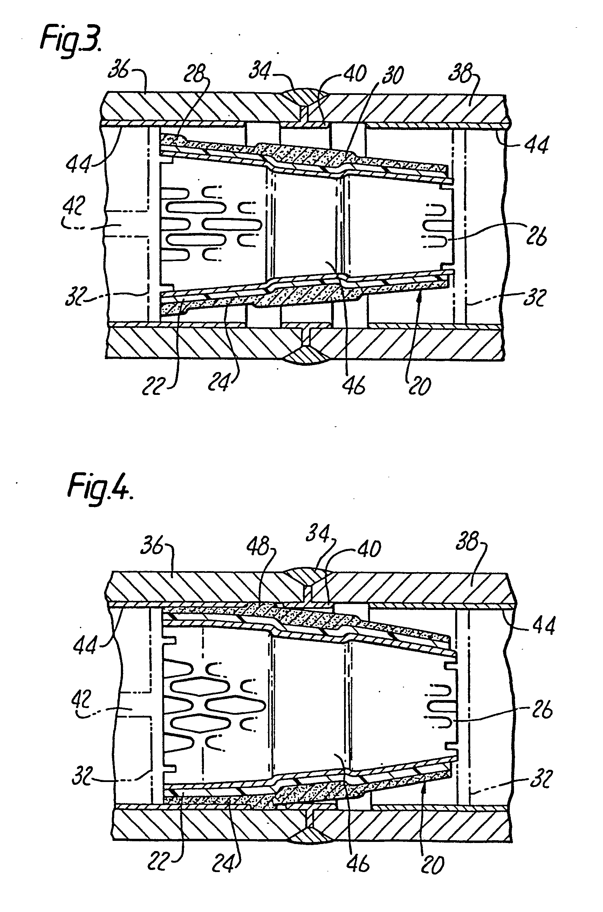

Figure 3 illustrates in cross-sectional view the device 20 held by a positioning arrangement 32 directly under a girth weld 34 which joins pipe 36 to pipe 38. A back-up ring 40 of "T" shaped cross-section has been used in the welding of pipe 36 to pipe 38 to prevent or at least reduce splattering of contamination from the weld 34 into the inside of the pipes. The device 20 is moved to the vicinity of the weld area, after the intense heat associated with welding has dissipated, by the positioning arrangement 32. The positioning arrangement 32, however, is not essential for operation of the device 20 itself. The positioning arrangement 32 is a pair of support discs and an axial member 42 which moves the device 20 from a position remote from the weld area to directly under the weld area when the welding heat has dissipated. The positioning arrangement 32 also acts as a heat shield to shield the device 20 from the heat of welding and as a windscreen to enhance the heating oven formed between the pipes and device 20 when external heat is used to recover the device. A particularly suitable positioning arrangement is disclosed in the present Applicants' contemporaneously filed European Patent Application Publication no. 0045628. The pipes 36 and 38 are lined with corrosion-resistant material 44 (Figures 3 to 5). It can also be seen in Figures 3—5 that the delivery arrangement 26 may have an annular detent region 46 which is used to reduce the force exerted by the delivery arrangement 26 on the liner 22 when the delivery arrangement expands towards the back-up ring 40.

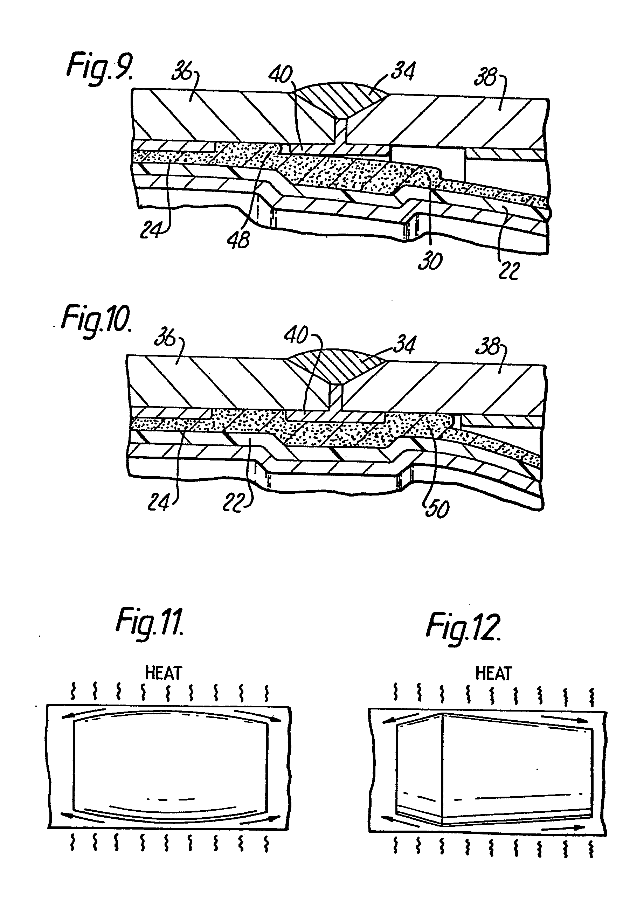

Figure 4 illustrates in partial cross-sectional view the device of Figure 3 at an intermediate stage while heat is being applied uniformly to the pipes 36 and 38 from a source outside the pipes 36 and 38. It can be seen at region 48 that the delivery arrangement 26 has expanded radially, forcing the tubular liner 22 towards the inside surface of pipe 36. The liner 22 is a flexible corrosion resistant material preferably made from crosslinked polymeric material, as will be discussed in further detail later, which is deformed by the delivery arrangement 26. The liner 22 is deformable but not flowable when heated. The bonding material 24 becomes flowable when heated and moves by the radial expansion of the frusto-conical shape of the delivery arrangement 26 into contact with the inside wall of the pipe 36 and will flow progressively between the liner 22 and the inside pipe wall, again as shown at 48. The delivery arrangement 26, by its radial expansion, essentially "pumps" the bonding material 24 in a single wave-like fashion thereby precluding the entrapment of air. This phenomenon can be clearly seen in Figures 9 and 10. Figure 9 illustrates in greater detail the wave-like configuration of the bonding material 24 in region 48 prior to its intimate contact with the back-up ring 40. Figure 10 illustrates further movement of the bonding material 24 which has precluded entrapment of air in the vicinity of the back-up ring 40. It can be seen that the extra bonding material 30 is used in the vicinity of the back-up ring 40 as filler. The extra material 28 as shown in Figure 1 likewise provides an important first body of bonding material 24 at the beginning of the expansion process. Again, Figure 10 illustrates at 50 the void-free encapsulation of the weld back-up ring 40 or, likewise any similar internal irregularities on the inside surface of the pipe.

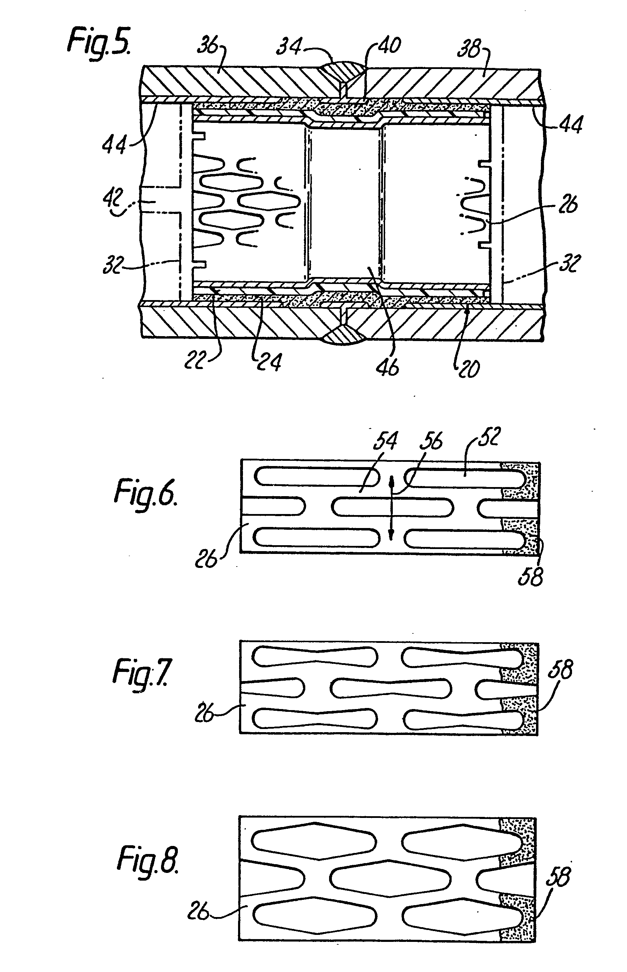

Figure 5 illustrates the device 20 after heating has been completed and the device 20 has expanded to provide a corrosion resistant area which overlaps corrosion resistant lining material 44 on the pipes 36 and 38.

Figures 6—8 illustrate the specific configuration of wall portions of the preferred embodiment and an alternative embodiment of the delivery arrangement 26. The delivery arrangement 26 comprises a cage-like member of memory metal alloy having a configuration or pattern of slots 52 and webs 54 arranged in an interlocking array of lever arms so as to provide amplification of the available recovery motion of the memory metal. Figures 6 and 7 illustrate alternative web and slot configurations in a compressed, i.e., unrecovered condition.

Figure 8 illustrates the delivery arrangement 26 in an expanded, i.e. recovered condition. The particular patterns illustrated in Figures 6 and 7 allow the lattice work structure to be compressed or reduced by as much as 25% to 75% in direction 56 (Figure 6). Stated another way, the patterns illustrated in Figures 6 and 7 allow for a memory metal structure to expand some 50% to 300% in direction 56 depending upon slot and web thicknesses. The memory metal configuration of Figure 8 when used in a generally cylindrical recovered configuration, as illustrated in Figure 2, can be deformed into the configuration of Figures 1 and 6 to 1/4—3/4 of its original diameter. A particularly suitable configuration is disclosed in the present Applicants' contemporaneously filed European Patent Application publication no. 0045627.

The delivery arrangement amplifies the motion available from a memory metal from the 4—9% maximum for solid metal members to values greater than 25%. A significant amount of motion is very desirable to provide clearance over internal pipe surface irregularities and the weld back-up ring during installation. To this end, the delivery arrangement preferably comprises an open cage-like structure consisting of machined, etched, stamped or otherwise formed slots of various geometries connected by fingers of memory metal which function as bending beams. The multiplicity of beams spaced apart by slot areas provides the means for amplifying the recovery motion. Figure 7 illustrates a section of a deformed delivery arrangement which when recovered, will consist of straight sided slots as illustrated in Figure 6. Figure 6 shows a section of a deformed delivery arrangement which when recovered will consist of diamond shaped slots as shown in Figure 8. The amount of recoverable motion available is primarily a function of slot width, beam width, beam length, and the amount of bending strain per beam. These variables can be balanced in various combinations to yield similar or identical performance. Also apparent is that this approach would also greatly amplify motion in a planar direction with flat slotted sheet.

Figures 6—8 show that the memory metal delivery arrangement 26 is coated with a protective coating 58. This material 58 may be the same material used to form the liner 22. The protective coating 58 provides corrosion resistance and may facilitate bonding of the liner to the delivery arrangement as will be discussed later. However, delivery arrangement of the invention may be left uncoated as that it can eventually be removed by corrosive forces.

Figures 11—14 illustrate alternative configurations of the delivery arrangement. Figure 11 illustrates a delivery arrangement and overall device configuration which is generally barrel-shaped. This configuration will likewise expand progressively upon uniform heating to progressively secure a corrosion-resistant liner by pumping a wave of a bonding material, but will do so in two substantially opposite directions rather than in one direction.

Figure 12 illustrates a second alternative embodiment of the delivery arrangement which comprises opposed frusto-conical sections which will likewise move a wave of bonding material in two directions.

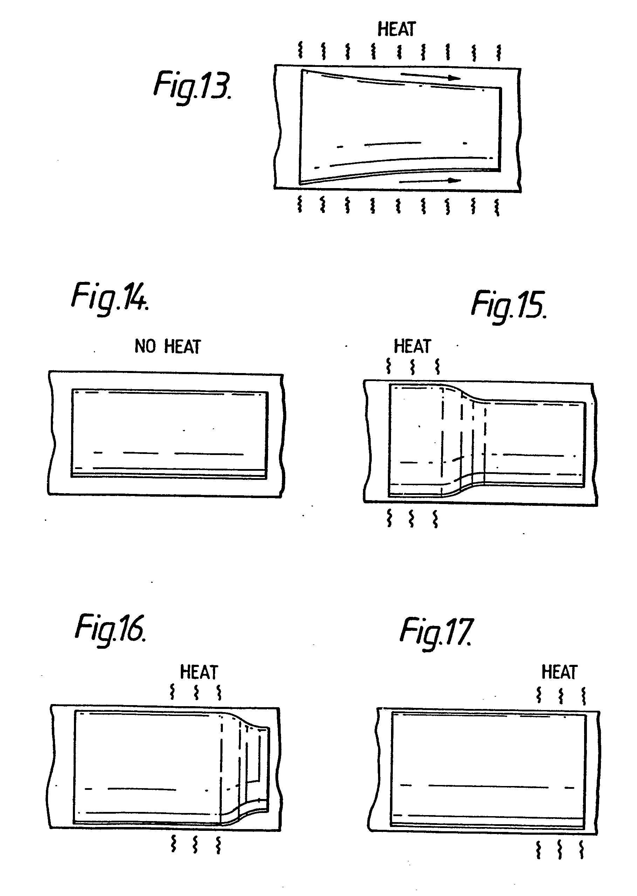

Figure 13 illustrates a third alternative embodiment of the delivery arrangement which is generally bell-shaped having a gradually sloped contour which will distribute the bonding material substantially in the manner of the device illustrated in Figures 1—5.

Figure 14 illustrates an initially generally cylindrical fourth alternative embodiment of the delivery arrangement which can be altered in shape into forms shown in Figures 1—5, 11, 12 or 13 by a programmed heating.

Programmed heating consists of sequentially heating specific zones of the pipe corresponding to specific locations on the device for a specified time. By doing this the device can be recovered progressively as the different zones are heated. This has the effect of forming a conical shape which imparts the pumping action to the bonding material, thus preventing void formation.

Figures 15, 16 and 17 illustrate the use of programmed heating with an initially cylindrical part.

4

Of course the heating zones may be sequenced differently to provide products which expand as do the other shapes shown in Figures 11 to 13.

Progressive recovery of the device can be achieved in several different ways. The liner could be selectively cross-linked along its axial length which is believed to create a varying softening point along its axial length. This would manifest itself during installation of a cylindrical device with uniform heating in a progressive recovery as discussed above. The same effect could be achieved by varying the liner and/or bonding material thickness along the axial length of the device. Thicker sections of the liner would retard or delay recovery of the device locally to impact a progressive recovery mode. Varied bonding material thickness would cause the part to contact the pipe wall first where the bonding material is thickest. This would start the pumping wave and cause the bonding material to flow progressively.

The preferred delivery means comprises a memory metal, i.e. an alloy which manifests the shape-memory effect. Such alloys are well known, and they, and the shape-memory effect, are discussed in, e.g., "Shape-Memory Alloys", Scientific American, v. 281, pp 74—82 (Nov. 1979). Especially suitable alloys for the delivery means of this invention are those made from a ternary or quaternary alloy of copper, zinc, aluminium and/or manganese. It is desirable, though not essential, that the memory metal material used for the delivery means should have an austenite martensite transformation temperature below the lowest in service operating temperature the device will encounter. This is not because the memory metal is required to continuously hold the liner means against the pipe interior, for that is one of the purposes of the bonding means, but rather to ensure that the delivery means should be in the more rigid austenitic state during operation. In this way, the chance of a part of the delivery means being damaged during normal operations, e.g. when a "pig" (mobile cleaning member) is sent through the pipe to clean it, is minimised. It is further desirable that the delivery means be bonded to the liner means, as this (a) provides additional strength and helps prevent buckling of the delivery means prior to installation, and (b) minimises the tendency of the liner means to split during the expansion of the delivery means. This bonding may be achieved with suitable adhesives. A more convenient method, however, is to coat the driver means with the same material as the liner means, and fuse the coating of the driver means to the liner means at a plurality of points. This coating of the driver means also helps to prevent any metal-metal contact when the device is in place.

It is within the scope of the instant invention to utilise spring-like materials other than memory metals as the delivery means. Suitable spring materials capable of large compression and subsequent recoveries could also be used satisfactorily as will become apparent later in the further description of the delivery means and the liner means interaction.

In one embodiment, the delivery arrangement comprises a radially compressed, open, cage-like tubular member of high modulus engineering plastics material. Such a delivery arrangement is contained radially by the liner. Upon application of heat, the liner softens and allows the delivery arrangement to expand and recover in a spring-like manner to force the liner and bonding material radially outwardly towards the inside of the pipe.

It will be appreciated that such a plastics material is inherently corrosion resistant, but it may still be advantageous to provide a protective coating, such as the coating 58, for example to facilitate bonding of the liner to the delivery arrangement.

The incorporation of high modulus engineering plastics material into the instant invention as a delivery means is desirable from the standpoint that most inorganic materials do not possess the required high yield elongations, $\geq 4\%$ that insures necessary clearance, pipe tolerance accommodation, and bonding means flow characteristics for proper functioning of the device. In general, these engineering materials have a combination of properties that allows considerable amplified motion by the specific cage configuration and sufficient force to deform the liner means at its melting point. A yield elongation of approximately 4% at ambient conditions through the melting point of the liner means; and a Young's modulus of $\geq 2.11 \times 10^8$ kg/m$^2$ ($3 \times 10^5$ psi) at the melting point of the liner means are the requisite properties of the delivery means. However, it is apparent to one skilled in the art that a number of factors such as the thickness and Young's modulus of the liner material and the specific cage configuration employed can cause the requirements to vary somewhat. The engineering plastics can be non-reinforced polymers such as poly(amide/imide) copolymers, reinforced thermoplastics such as nylons, polyesters, and polyarylenes or thermosetting resins. As apparent to those skilled in the art a number of reinforcing materials can be used such as short or continuous fibres of glass, graphite or alumina. Levels of these reinforcing materials are generally in the range of 20 to 40% by weight.

**0 045 629**

### Typical engineering plastics

| Material | Modulus @ temp. | Yield elongation @ 23°C |
|---|---|---|
| Torlon (TM) 4203* | $3.52 \times 10^8$ (500,000) @ 170°C | 10% |
| Envex (TM) 1000* | $2.25 \times 10^8$ (320,000) @ 170°C | 10% |
| Unjohn (TM) 2080* | $2.18 \times 10^8$ (310,000) @ 170°C | 10% |

(Modulus values are in kg/m² with psi values in brackets)

As an example a liner means constructed from 0.051 cm thick high density polyethylene with a melting point of approximately 130°C and a hot modulus of $7.03 \times 10^3$ kg/m² (10 psi) at 150°C can be used to internally protect a girth weld on a 10.16 cm diameter pipe from the action of corrosive media which are transported inside, when a suitable adhesive or bonding means and a cage like delivery means fabricated from poly(imide/amide) are employed.

\*Torlon (TM) 4203 is a poly(amide/imide commercially available from Amoco Oil Company
\*Envex (TM) 1000 is a polyimide commercially available from Rodgers Chemical Company
\*Upjohn (TM) 2080 is a polyimide commercially available from the Upjohn Company
Pressure generated by the delivery means:

$$P_o = \frac{(pi) \cdot (delta)d}{n} \frac{Eth^3}{r(L+W)L^3}$$

where
(delta) d=difference between free recovery diameter and installed diameter of delivery means
n=number of elements in delivery means
t=thickness
E=Modulus of Elasticity
r=nominal pipe radius
h=beam width
W=axial distance between beams
L=beam length

Pressure necessary to deform liner means:

$$P_L = \frac{Et (Epsilon)}{r}$$

where
E=Modulus of Elasticity
t=thickness
Epsilon=% deformation during expansion
r=smallest inital radius of liner

$$P_o = (703.07) \frac{(pi) \cdot (0.75)}{60} \frac{4 \times 10^5}{2(0.885 + 0.2600)} \frac{(0.125)^3 \quad (0.075)}{(0.885)^3}$$

$$= 1.02 \times 10^3 \text{ kg/m}^2 \ (= 1.45 \text{ lbs/in}^2)$$

$$P_L = 703.07 \frac{(0.020)(10)(0.25)}{2} = 21.09 \text{ kg/m}^2 \ (= 0.03 \text{ lbs/in}^2)$$

6

0 045 629

The material of the liner means should possess several characteristics. It should be electrically non-conductive, to prevent galvanic action. It should be solid to a temperature above the maximum operating temperature of the pipe, but should be easily deformable below about 200°C by the delivery means to facilitate installation. It should, of course, be resistant to the materials it will encounter in service, such as hot saline water, $H_2S$, hydrocarbons, etc. It should be relatively impermeable to liquids and gases, to reduce pressurisation of any void area between the liner means and the pipe wall. For optimum installation, the material should be easily deformable by the delivery means somewhat below 200°C, as stated above, but the material should be thermally stable to temperatures substantially greater than that, say 250°C for at least about 1/2 hour, so that little or no damage to it will occur if the pipe is overheated. It should be capable of good bonding to the adhesive chosen and also to the memory metal or engineering plastics material or its coating. Although the liner means may be elastomeric or thermoplastic, it is necessary that it should not melt and flow during installation, but merely soften, so that it retains its integrity and forces the bonding means into contact with the pipe wall. This may be achieved by crosslinking the material of the liner means, such as by the use of chemical crosslinking or by irradiation. An especially suitable material is cross-linked poly(vinylidene fluoride), which polymer has a melting point of about 170°C. If a poly(vinylidene fluoride) sleeve is used as the liner means, the delivery means may also be coated with poly(vinylidene fluoride) by a known process such as electrostatic powder spraying, followed by fusion and cross-linking. The liner means and delivery means may then easily be attached to each other by heat-welding.

Up to the softening point of a thermoplastic or crosslinked thermoplastic liner means the hoop stress of the delivery means is less than that of the liner means and therefore is constrained by said liner means. At the liner means softening point its strength drops off rapidly with increasing temperature relative to that of the delivery means. Consequently the strength of the liner means becomes lower than the hoop stress exerted by the delivery means. As this happens the liner means is forced to expand against the pipe wall. An elastomeric liner means may be substituted for a thermoplastic or cross-linked thermoplastic liner means if it is provided with a suitable thermally activated constraining device to prevent its expansion by creep. Such a thermally activated constraining device might consist of bands of a thermoplastic material functioning as described above. Alternately the bonding means itself might serve as a thermally activated constraining device.

The surface of the liner means may be treated to enhance adhesion to the delivery and/or bonding means.

The material of the bonding means is also subject to certain constraints. First it should be capable of adhesion to the material of the liner means, to the internal coating of the pipe (usually an epoxy layer), and to the weld area, i.e. to both clean and dirty steel. Second, at the installation temperature, it should be sufficiently flowable that it will readily be spread along the region covered by the device, leaving no voids. A suitable viscosity range at installation temperature is from about 10 to $10^5$ kg/ms ($10^2$ to $10^6$ poise). Third, the material should be thermally stable to above the maximum installation temperature, and it is especially desirable that it not produce gases if overheated, since that could induce voids. Fourth, the material should be chemically stable under the pipe operating environment conditions, in particular it must be hydrolytically stable.

Two principal types of adhesive are suitable for use—thermosets and thermoplastics. Thermosets include, for example, epoxides, melamines, urethanes, and phenolic resins. It is desirable that a thermoset should have a cure temperature near the expected installation temperature (about 200°C). While a lower temperature would be possible, for improvement of shelf life and avoidance of pre-curing before the bonding means contacts the wall during installation, an installation and cure temperature of about 200°C is preferable. However, the thermoset adhesive must be sufficiently fluid before cure so that it will spread adequately. This may be achieved by the material having a softening point of, say 70—140°C. In this way, by the time the driver means expands towards the pipe wall, the bonding means is already sufficiently flowable.

Typical thermoplastics include, for example, polyamides, (such as the various nylons) and polyesters. In this case, the bonding means should have a melting point close to the softening point of the material of the liner means, so that the bonding means will be flowable at the time of the radial expansion.

One suitable thermoplastic polyamide is Nylon 11, and the formulation RDP 21 WHTE commercially available from Rilsan Corporation of the U.S.A., containing this polyamide has been found to be of particular suitability. Thermoplastic polyamides have advantages over thermosetting epoxy adhesives, generally having substantially unlimited lifetimes at room and elevated temperatures, and also being more convenient to install.

It has been found, however, that the appreciable reduction in viscosity that takes place when the RDP 21 WHTE adhesive melts, in combination with the outwardly-directed force of the expanding delivery means, can result in the adhesive being urged out of the ends of the liner means thereby leaving insufficient adhesive to form a satisfactory continuous and durable bondline. To avoid such a starved bondline, a laminate may be formed in which a fibreglass cloth, or other suitable matrix, is impregnated with RDP 21 WHTE adhesive. Upon heating, the expanding delivery means forces the laminate against the inner surface of the pipe, but the cloth prevents the liner means being urged into

7

0 045 629

contact with the pipe and thus prevents the adhesive being squeezed away from the required bond area. A glass cloth thickness of about 10 mils has been found suitable. In addition to restraining the adhesive to the required bond area, the fibreglass cloth also avoids direct contact, usually metal-to-metal, between the delivery means and the back-up weld ring should the liner means be ruptured. Corrosion at such a contact is thereby avoided. The cloth also acts to distribute such forces as lap, peel and cleavage stress, thereby reducing the possibility of failure of the pipe seal. Furthermore, the fibreglass of the laminate acts as a reinforcing member and resists the contracting forces within the adhesive that arise on change of state thereof from the melt to the solid. The tendency of the adhesive to pull away from the pipe coating, and thereby reduce the effectiveness of the seal, is thus reduced.

One possibility applicable particularly to thermoplastics is that the liner and bonding means may comprise the same material. This ensures chemical compatibility, and, by selectively crosslinking the liner means region of the material, the liner means can be rendered non-flowable while the bonding means remains flowable. In this way, a unitary sleeve comprising both liner and bonding means may be used, which simplifies the device and enhances reliability.

**Claims**

1. An internal pipe protection device comprising tubular delivery means (26) arranged to expand transversely upon application of heat; tubular liner means (22) outside of and in contact with the delivery means, the liner means being corrosion resistant and deformable upon application of heat; and bonding means (24) outside of and in contact with the liner means to bond the liner means to the inside surface of a pipe (36, 38), wherein the bonding means is flowable and activatable by application of heat, and the delivery means is expandable transversely upon application of heat, such that it deforms the liner means and forces the liner and bonding means transversely outward progressively along their length so that the bonding means comes progressively into contact with the inside of the pipe, and flows progressively along the outer surface of the liner means between the liner means and the inside of ths pipe.

2. A device according to Claim 1, wherein the device has a generally frusto-conical shape, or a generally bell-shape, the device being expandable substantially radially outwardly upon application of heat uniformly along its length thereby causing the progressive flow of the bonding means substantially in one direction.

3. A device according to Claim 1, wherein the device has a generally barrel-shape, the device being expandable substantially radially outwardly upon application of heat uniformly along its length thereby causing the progressive flow of the bonding means in opposite directions.

4. A device according to Claim 1, wherein the device has a generally cylindrical shape, the device being expandable upon application of heat progressively along its length to facilitate a progressive expansion of the device and the progressive flow of the bonding means.

5. A device according to any preceding Claim, wherein the delivery means comprises an open cage-like member.

6. A device according to any preceding Claim, wherein the delivery means is a tubular member of memory metal, the member being coated with a corrosion resistant material and being arranged to expand generally radially upon heating.

7. A device according to any of Claims 1 to 5, wherein the delivery means is formed from high modulus engineering plastics material, and wherein the liner means maintains the delivery means transversely compressed until the liner means softens and deforms upon application of heat.

8. A device according to any preceding Claim, wherein the liner means comprises a crosslinked polymeric material, the liner means radially constraining the delivery means before heat is applied to the device.

9. A device according to Claim 8, wherein the bonding means and the liner means comprise an integral layer of polymeric material, the liner means defining an inside region of said layer which is substantially crosslinked and the bonding means defining an outside region which is substantially non-crosslinked.

10. A device according to any preceding Claim, wherein the bonding means comprises adhesive and a carrier therefor.

11. A device according to Claim 10, wherein the carrier comprises a cloth-like matrix.

12. A device according to Claim 10 or 11, wherein the carrier comprises a fibreglass cloth, and the adhesive comprises Nylon 11 impregnated therein.

13. A device according to any preceding Claim, comprising positioning means arranged to move the delivery means from a remote position to an activating position where the delivery means is heated and thus expanded.

14. A device according to any preceding Claim, wherein the delivery means is bonded to the liner means.

15. A method of providing corrosion protection for the inside of a pipe comprising the steps of locating a heat-activatable pipe protection device within a section of the pipe to be protected, the device comprising transversely heat-expandable delivery means (26), heat-deformable corrosion-

8

resistant liner means (22) outside of and in contact with the delivery means, and a heat-activatable bonding means outside of and in contact with the liner means; and heating the outside of the pipe along said section such that the delivery means expands and the liner and bonding means are forced transversely outward progressively along their length so that the bonding means comes progressively into contact with the inside of the pipe, the bonding means thereby flowing progressively along the outer surface of the liner means between the liner means and the inside of the pipe to form a bond therebetween.

16. A method according to Claim 15, wherein said heating of the outside of the pipe is effected generally uniformly along said section thereby expanding the delivery means, deforming the liner means and producing the progressive movement of the bonding means.

17. A method according to Claim 15, wherein said heating of the outside of the pipe is effected progressively along said section thereby causing progressive radial expansion of the liner means.

18. A method according to any of Claims 15 to 17, wherein the step of locating the device within the section of the pipe to be protected comprises placing the device within the pipe in a position remote from said section and subsequently moving the device to the said section.

19. A method according to any of Claims 15 to 18, wherein the bonding means is formed by impregnating a cloth-like matrix with an adhesive.

**Revendications**

1. Un dispositif de protection interne de tuyaux comprenant des moyens applicateurs tubulaires (26) agencés de façon à se dilater transversalement à la suite de l'application de chaleur, des moyens de chemisage tubulaires (22) disposés à l'extérieur des moyens applicateurs et en contact avec ces derniers, les moyens de chemisage étant résistants à la corrosion et déformables à la suite de l'application de chaleur; et des moyens de liaison (24) disposés à l'extérieur des moyens de chemisage et en contact avec ces moyens pour coller les moyens de chemisage à la surface intérieure d'un tuyau (36, 38), dans lequel les moyens de liaison sont rendus fluides et actifs par application de chaleur et les moyens applicateurs se dilatent transversalement à la suite de l'application de chaleur de sorte qu'ils déforment les moyens de chemisage et repoussent les moyens de chemisage et les moyens de liaison transversalement vers l'extérieur progressivement suivant leur longueur de sorte que les moyens de liaison viennent progressivement en contact avec l'intérieur du tuyau et s'écoulent progressivement le long de la surface extérieure des moyens de chemisage entre les moyens de chemisage et l'intérieur du tuyau.

2. Un dispositif selon la revendication 1 dans lequel le dispositif a une forme générale tronconique ou une forme générale en cloche, le dispositif pouvant se dilater sensiblement radialement vers l'extérieur lors de l'application uniforme de chaleur suivant sa longueur provoquant de ce fait l'écoulement des moyens de liaison sensiblement dans une direction.

3. Un dispositif selon la revendication 1 dans lequel le dispositif a une forme générale en tonneau, le dispositif étant dilatable sensiblement radialement vers l'extérieur lors de l'application uniforme de chaleur suivant sa longueur provoquant de ce fait l'écoulement des moyens de liaison sensiblement dans des directions opposées.

4. Un dispositif selon la revendication 1, dans lequel le dispositif a une forme générale cylindrique, le dispositif étant dilatable lors de l'application progressive de chaleur suivant sa longueur pour faciliter une dilatation progressive du dispositif et l'écoulement progressif des moyens de liaison.

5. Un dispositif selon l'une quelconque revendication précédente, dans lequel les moyens applicateurs sont constitués par un organe ouvert du type cage.

6. Un dispositif selon une quelconque revendication précédente dans lequel les moyens applicateurs sont constitués par un organe tubulaire de métal à mémoire, l'organe étant revêtu d'une matière résistant à la corrosion et étant agencé de façon à se dilater approximativement radialement lorsqu'il est chauffé.

7. Un dispositif selon une quelconque des revendications 1 à 5, dans lequel les moyens applicateurs sont fabriqués en une matière plastique technique à haut module et dans lequel les moyens de chemisage maintiennent les moyens applicateurs transversalement comprimés jusqu'à ce que les moyens de chemisage se remollissent et se déforment à la suite de l'application de chaleur.

8. Un dispositif selon une quelconque revendication précédente, dans lequel les moyens de chemisage comprennent une matière polymère réticulée, les moyens de chemisage retenant radialement les moyens applicateurs avant que de la chaleur soit appliquée au dispositif.

9. Un dispositif selon la revendication 8, dans lequel les moyens de liaison et les moyens de chemisage sont constitués par une couche unitaire d'une matière polymère, les moyens de chemisage formant une région intérieure de ladite couche qui est fortement réticulée et les moyens de liaison formant une région extérieure qui est essentiellement non réticulée.

10. Un dispositif selon une quelconque revendication précédente dans lequel les moyens de liaison comprennent un adhésif et un support pour cet adhésif.

11. Un dispositif selon la revendication 10, dans lequel le support est constitué par une matrice du type toile.

# 0 045 629

12. Un dispositif selon la revendication 10 ou 11 dans lequel le support est constitué par une toile en fibres de verre et l'adhésif est du Nylon 11 dont la toile est imprégnée.

13. Un dispositif selon une quelconque revendication précédente comprenant des moyens de positionnement disposés de manière à déplacer les moyens applicateurs depuis une position éloignée jusqu'à une position d'activation dans laquelle les moyens applicateurs sont chauffés et de ce fait dilatés.

14. Un dispositif selon une quelconque revendication précédente, dans lequel les moyens applicateurs sont collés aux moyens de chemisage.

15. Un procédé pour assurer la protection contre la corrosion de l'intérieur d'un tuyau, comprenant les étapes qui consistent à disposer un dispositif de protection de tuyau actionnable par la chaleur à l'intérieur d'un tronçon du tuyau à protéger, le dispositif comprenant les moyens applicateurs (26) dilatables transversalement sous l'action de la chaleur, des moyens de chemisage (22) résistant à la corrosion déformables à la chaleur disposés à l'extérieur des moyens applicateurs et en contact avec ces moyens et des moyens de liaison rendus actifs par la chaleur et disposés à l'extérieur des moyens de chemisage et en contact avec ces moyens et à chauffer l'extérieur du tuyau le long dudit tronçon de façon que les moyens applicateurs se dilatent et que les moyens de chemisage et de liaison soient repoussés transversalement vers l'extérieur suivant leur longueur de manière que les moyens de liaison viennent progressivement en contact avec l'intérieur du tuyau, les moyens de liaison s'écoulant, de ce fait, progressivement le long de la surface extérieur des moyens de chemisage et de l'intérieur du tuyau pour produire une liaison entre eux.

16. Un procédé selon la revendication 15 dans lequel ledit chauffage de l'extérieur du tuyau est effectué approximativement uniformément le long dudit tronçon de façon à provoquer une dilatation des moyens applicateurs, à déformer les moyens de chemisage et à produire le déplacement progressif des moyens de liaison.

17. Un procédé selon la revendication 15 dans lequel ledit chauffage de l'extérieur du tuyau est effectué progressivement le long dudit tronçon de façon à provoquer une dilatation radiale progressive des moyens de chemisage.

18. Un procédé selon l'une quelconque des revendications 15 à 17, dans lequel l'étape de positionnement du dispositif à l'intérieur du tronçon de tuyau à protéger consiste à placer le dispositif à l'intérieur du tuyau dans un emplacement éloigné dudit tronçon et à déplacer ensuite le dispositif jusqu'audit tronçon.

19. Un procédé selon l'une quelconque des revendications 15 à 18, dans lequel on forme les moyens de liaison en imprégnant une matrice du type toile d'un adhésif.

## Patentansprüche

1. Vorrichtung zum Schutz des Inneren von Rohren mit einer rohrförmigen Zufuhreinrichtung (26) solcher Ausbildung, dass sich diese bei Zuführung von Wärme in Querrichtung ausdehnt, einem rohrförmigen Auskleidungsmittel (22) ausserhalb und im Kontakt mit der Zufuhreinrichtung, wobei das Auskleidungsmittel korrosionsbeständig und bei Zuführung von Wärme verformbar ist, und einem Bindemittel (24) ausserhalb des und im Kontakt mit dem Auskleidungsmittel zur Bindung des Auskleidungsmittels an die Innenfläche eines Rohrs (36, 38), wobei das Bindemittel fliessfähig und durch Zuführung von Wärme aktivierbar und die Zufuhreinrichtung bei Zuführung von Wärme in Querrichtung ausdehnbar ist derart, dass sie das Auskleidungsmittel verformt und das Auskleidungsund Bindemittel progressiv auf deren Länge in Querrichtung nach aussen treibt, so dass das Bindemittel progressiv mit der Rohrinnenseite in Kontakt kommt und progressiv längs der Aussenfläche des Auskleidungsmittels zwischen dem Auskleidungsmittel und der Rohrinnenseite fliesst.

2. Vorrichtung nach Anspruch 1 mit allgemein Kegelstumpfform oder allgemein Glockenform, wobei die Vorrichtung bei gleichförmig auf ihrer Länge erfolgender Zuführung von Wärme im wesentlichen radial nach aussen ausdehnbar ist unter hierdurch Herbeiführung des progressiven Fliessens des Bindemittels in im wesentlichen einer Richtung.

3. Vorrichtung nach Anspruch 1 mit allgemein Fassform, wobei die Vorrichtung bei gleichförmig auf ihrer Länge erfolgender Zuführung von Wärme im wesentlichen radial nach aussen ausdehnbar ist unter hierdurch Herbeiführung des progressiven Fliessens des Bindemittels in entgegengesetzten Richtungen.

4. Vorrichtung nach Anspruch 1 mit allgemein Zylinderform, wobei die Vorrichtung zur Erleichterung einer progressiven Ausdehnung der Vorrichtung und des progressiven Fliessens bei progressiv auf ihrer Länge erfolgender Zuführung von Wärme ausdehnbar ist.

5. Vorrichtung nach einem vorhergehenden Anspruch, bei der die Zufuhreinrichtung ein offenes käfigartiges Teil umfasst.

6. Vorrichtung nach einem vorhergehenden Anspruch, bei der die Zufuhreinrichtung ein rohrförmiges Teil aus Memory-Metall und das Teil mit einem korrosionsbeständigen Material beschichtet und entsprechend einer allgemein radialen Ausdehnung beim Erhitzen ausgebildet ist.

7. Vorrichtung nach einem der Ansprüche 1 bis 5, bei der die Zufuhreinrichtung von hochmoduligem, technischem Kunststoffmaterial gebildet wird und das Auskleidungsmittel die Zufuhreinrichtung in Querrichtung zusammengepresst hält, bis das Auskleidungsmittel bei Zuführung von Wärme erweicht und sich verformt.

8. Vorrichtung nach einem vorhergehenden Anspruch, bei der das Auskleidungsmittel von einem vernetzten, polymeren Material gebildet wird und die Zufuhreinrichtung bis zur Zuführung von Wärme zu der Vorrichtung unter radialen Zwangskräften hält.

9. Vorrichtung nach Anspruch 8, bei der das Bindemittel und das Auskleidungsmittel von einer integralen Schicht polymeren Materials gebildet werden, wobei das Auskleidungsmittel eine innenseitige, im wesentlichen vernetzte Region jener Schicht und das Bindemittel eine aussenseitige Region ausbildet, die im wesentlichen nicht vernetzt ist.

10. Vorrichtung nach einem vorhergehenden Anspruch, bei der das Bindemittel von Klebstoff und einem Träger für denselben gebildet wird.

11. Vorrichtung nach Anspruch 10, bei der der Träger von einer tuchartigen Matrix gebildet wird.

12. Vorrichtung nach Anspruch 10 oder 11, bei der der Träger von Glasfaserstoff und der Klebstoff von diesem einimprägnierten Nylon 11 gebildet wird.

13. Vorrichtung nach einem vorhergehenden Anspruch mit einem Positioniermittel, das der Bewegung der Zufuhreinrichtung von einer entfernten Position in eine Aktivierungsposition entsprechend ausgebildet ist, in welcher die Zufuhreinrichtung erhitzt und auf diese Weise ausgedehnt wird.

14. Vorrichtung nach einem vorhergehenden Anspruch, bei der die Zufuhreinrichtung an das Auskleidungsmittel gebunden ist.

15. Verfahren zum Korrosionsschutz der Innenseite eines Rohrs mit den Stufen, eine wärmeaktivierbare Rohrschutzvorrichtung in einem zu schützenden Abschnitt des Rohrs anzuordnen, wobei die Vorrichtung eine in Querrichtung wärmeausdehnbare Zufuhreinrichtung (26), ein wärmeverformbares, korrosionsbeständiges Auskleidungsmittel (22) ausserhalb und im Kontakt mit der Zufuhreinrichtung und ein wärmeaktivierbares Bindemittel ausserhalb des und im Kontakt mit dem Auskleidungsmittel aufweist, und die Aussenseite des Rohrs längs jenes Abschnitts zu erhitzen derart, dass die Zufuhreinrichtung sich ausdehnt und das Auskleidungs- und Bindemittel progressiv auf deren Länge in Querrichtung nach aussen getrieben werden, so dass das Bindemittel progressiv mit der Rohrinnenseite in Kontakt kommt, wodurch das Bindemittel progressiv längs der Aussenfläche des Auskleidungsmittels zwischen dem Auskleidungsmittel und der Rohrinnenseite zur Ausbildung einer Bindung zwischen diesen fliesst.

16. Verfahren nach Anspruch 15, bei dem das Erhitzen der Aussenseite des Rohrs längs jenes Abschnittes allgemein gleichförmig bewirkt und hierdurch die Zufuhreinrichtung ausgedehnt, das Auskleidungsmittel verformt und die progressive Bewegung des Bindemittels erzeugt wird.

17. Verfahren nach Anspruch 15, bei dem man das Erhitzen der Aussenseite des Rohrs progressiv längs jenes Abschnitts bewirkt und hierdurch die progressive radiale Ausdehnung des Auskleidungsmittels herbeiführt.

18. Verfahren nach einem der Ansprüche 15 bis 17, bei dem man in der Stufe der Anordnung der Vorrichtung in dem zu schützenden Abschnitt des Rohrs die Vorrichtung in dem Rohr in eine von jenem Abschnitt entfernte Position bringt und nachfolgend zu jenem Abschnitt bewegt.

19. Verfahren nach einem der Ansprüche 15 bis 18, bei der das Bindemittel durch Imprägnierung einer tuchartigen Matrix mit einem Klebstoff gebildet wird.

Fig.1.

Fig.2.

*Fig.3.*

*Fig.4.*

Fig.5.

36  34  40  38

44  44

42  26

32  32

22  24  46  20

Fig.6.

54  56  52

26  58

Fig.7.

58

26

Fig.8.

26  58

0 045 629

**Fig.9.**

36  40  34  38

24  48  30  22

**Fig.10.**

36  40  34  38

24  22  50

**Fig.11.**

HEAT

**Fig.12.**

HEAT

4

Fig.13.

Fig.14.

Fig.15.

Fig.16.

Fig.17.